# EUROPÄISCHE PATENTSCHRIFT

(11) **EP 3 475 116 B1**
(45) Veröffentlichungstag und Bekanntmachung des Hinweises auf die Patenterteilung: **02.08.2023**
(21) Anmeldenummer: 17723637.9
(22) Anmeldetag: 25.04.2017
(51) Int. Cl.: B60L 3/00, B60L 3/04

(54) **VERFAHREN UND VORRICHTUNG ZUR EXTERNEN ÜBERWACHUNG EINER LEISTUNGSELEKTRONIK**
METHOD AND DEVICE FOR EXTERNAL MONITORING OF POWER ELECTRONICS
PROCÉDÉ ET DISPOSITIF POUR LA SURVEILLANCE EXTERNE D'UNE ÉLECTRONIQUE DE PUISSANCE

(30) Priorität: 27.06.2016 DE 102016211498
(43) Veröffentlichungstag der Anmeldung: 01.05.2019
(73) Patentinhaber: Robert Bosch GmbH, 70442 Stuttgart (DE)
(72) Erfinder: FEUCHTER, Wilfried, 74635 Kupferzell (DE); SCHILD, Johannes, 74232 Abstatt (DE)
(86) Internationale Anmeldenummer: PCT/EP2017/059733
(87) Internationale Veröffentlichungsnummer: WO 2018/001598

(56) Entgegenhaltungen:
- EP-A1- 0 588 628
- EP-A1- 2 554 426
- EP-A1- 2 675 060
- JP-A- 2014 064 435
- US-A1- 2007 070 667
- US-A1- 2016 149 534

## Beschreibung

Die Erfindung betrifft ein Verfahren und eine Vorrichtung zur externen Überwachung einer Leistungselektronik. Ferner betrifft die Erfindung einen Antriebsstrang mit einer entsprechenden Vorrichtung und ein Fahrzeug mit einem Antriebsstrang sowie ein Computerprogramm und ein maschinenlesbares Speichermedium.

### Stand der Technik

Bei Fahrzeugen mit einem elektrischen Antriebsstrang wird eine elektrische Maschine mittels eines Wechselrichters mit elektrischer Energie aus einer Energiequelle versorgt. Dabei wird Strom aus einer Gleichspannungsquelle mittels des Wechselrichters in eine mehrphasige Spannung zur Versorgung der elektrischen Maschine gewandelt. Für einen sicheren Betrieb des elektrischen Antriebsstrangs ist ein bestimmungsgemäßes Verhalten und Funktionieren des Wechselrichters notwendig. Ein fehlerhaftes Verhalten eines Wechselrichters kann sehr gefährlich sein, da beispielsweise dadurch ein Fahrzeug ungewollt beschleunigen könnte. Daher besteht das Bedürfnis einer Überwachung einer Leistungselektronik oder leistungselektronischer Baugruppen eines elektrischen Antriebsstrangs.

Die Druckschrift EP 2 554 426 A1 offenbart eine redundante Antriebssteuerung, bestehend aus zwei Motorsteuerungen, welche eine kontinuierliche Ansteuerung des Motors erlaubt, selbst bei Auftreten eines Fehlers in einer der Motorsteuerungen. Die Druckschrift EP 2 675 060 A1 offenbart einen Spannungswandler mit einer Überstromüberwachung. Die JP 2014 064435 A offenbart eine Vorrichtung zum Schutz eines Wechselrichters vor Überhitzung.

### Offenbarung der Erfindung

Erfindungsgemäß wird ein Verfahren zur externen Überwachung einer Leistungselektronik gemäß Anspruch 1 bereitgestellt.

Es wird ein Verfahren zur externen Überwachung einer Leistungselektronik bereitgestellt. Zur Ansteuerung der zu überwachenden Leistungselektronik ist eine erste Steuerelektronik vorgesehen. Das Verfahren zur externen Überwachung der Leistungselektronik wird von einer unabhängigen zweiten Steuerelektronik ausgeführt. Das Verfahren umfasst mehrere Schritte. Zunächst wird ein Parameter ermittelt. Dieser Parameter ist insbesondere ein Ausgabeparameter der Leistungselektronik, beispielsweise ein Strom oder eine Spannung, die mittels der Leistungselektronik übertragen oder ausgegeben wird. Der Parameter ist ein Parameter, der mit dem Verhalten oder der Funktionalität der Leistungselektronik korreliert. So könnte der Parameter beispielsweise das Verhalten eines Verbrauchers sein, der mittels der Leistungselektronik versorgt wird, beispielsweise dessen Leistungsaufnahme oder Energieabgabe. Weiter wird die Differenz des ermittelten Parameters und eines Sollwertes bestimmt. Der Sollwert ist ein Wert in Abhängigkeit dessen die erste Steuerelektronik die Leistungselektronik derart ansteuert, dass dieser Sollwert erfüllt wird. Der zweiten Steuerelektronik werden der Sollwert und der Parameter zugeführt. Die zweite Steuerelektronik überwacht das Verhalten der Leistungselektronik mittels der Bestimmung der Differenz des Parameters und des Sollwertes. Seitens der zweiten Steuerelektronik wird die Leistungselektronik angesteuert falls der Betrag der Differenz einen Grenzwert überschreitet, insbesondere einen vorgebbaren Grenzwert überschreitet. Somit reagiert die zweite Steuerelektronik auf ein Fehlverhalten oder ein nicht bestimmungsgemäßes Verhalten der Leistungselektronik. Vorteilhaft wird ein Verfahren zur externen Überwachung einer Leistungselektronik bereitgestellt.

Erfindungsgemäß umfasst der Schritt der Ansteuerung der Leistungselektronik das Vorgeben einer Steueranforderung an die erste Steuerelektronik.

Als Reaktion auf das Fehlverhalten der Leistungselektronik wird seitens der zweiten Steuerelektronik eine Steueranforderung an die erste Steuerelektronik vorgegeben. Die Steueranforderung kann beispielsweise die Vorgabe eines Drehmomentes an die Leistungselektronik umfassen, beispielsweise ein Drehmoment von Null. Auch kann Steueranforderung eine Anforderung an die erste Steuerelektronik zur Überführung der Leistungselektronik in einen sicheren Zustand sein. Insbesondere geht in diesem sicheren Zustand keine weitere Gefahr von der Leistungselektronik aus. Vorteilhaft wird eine Reaktionsmöglichkeit auf die Feststellung eines Fehlverhaltens der Leistungselektronik bereitgestellt.

In einer anderen Ausgestaltung der Erfindung wird die Steueranforderung mittels einer Busbotschaft, insbesondere mittels einer CAN-Bus-Botschaft an die erste Steuerelektronik vorgegeben. Vorteilhaft ist kein zusätzliches Kommunikationsmittel notwendig, wenn bereits existierende Kommunikationsmöglichkeiten für die Steueranforderung genutzt werden.

In einer anderen Ausgestaltung der Erfindung umfasst der Schritt der Ansteuerung der Leistungselektronik zusätzlich das Abschalten der Leistungselektronik, falls die vorgegebene Steueranforderung fehlerhaft, insbesondere nicht, umgesetzt wird.

Die Ansteuerung der Leistungselektronik ist zweistufig ausgestaltet und umfasst ein vollständiges Abschalten der Leistungselektronik für den Fall, dass die zunächst vorgegebene Steueranforderung der zweiten Steuerelektronik fehlerhaft von der Leistungselektronik umgesetzt wird. Vorteilhaft wird ein zweistufiges Verfahren als Reaktion auf ein Fehlverhalten der Leistungselektronik bereitgestellt.

In einer anderen Ausgestaltung der Erfindung umfasst ein Testen des Verfahrens die Schritte: Abschalten der Leistungselektronik und Empfang eines Signals von der ersten Steuerelektronik als Reaktion auf das Abschalten.

Die Überwachung einer Leistungselektronik ist relevant für die Sicherheit des Betriebs der Leistungselektronik. Daher werden Verfahrensschritte zum Testen des Überwachungsverfahrens bereitgestellt. Zunächst wird die Leistungselektronik abgeschaltet mittels der zweiten Steuerelektronik. Anschließend wird ein entsprechendes Signal von der ersten Steuerelektronik als Reaktion auf das Abschalten empfangen. Falls das Signal der ersten Steuerelektronik nicht innerhalb eines vorgebbaren Zeitraumes empfangen wird, bleibt die Leistungselektronik dauerhaft abgeschaltet. Vorteilhaft wird ein Verfahren zum Testen des Überwachungsverfahrens bereitgestellt.

In einer anderen Ausgestaltung der Erfindung umfasst das Abschalten der Leistungselektronik, das Schalten der "enable line" der Leistungselektronik auf "low".

Die Leistungselektronik umfasst eine sogenannte "enable line", insbesondere eine elektrische Verbindung. Nur falls der Pegel der "enable line" auf "high" ist, ist ein Betreiben der Endstufen der Leistungselektronik möglich. Der Pegel der "enable line" ist insbesondere auf "high", falls eine anliegende Spannung einen ersten Schwellwert überschreitet. Wenn der Pegel der "enable line" auf "low" liegt, ist ein Energiefluss durch die Endstufen der Leistungselektronik nicht möglich. Der Pegel der "enable line" ist insbesondere auf "low", falls eine anliegende Spannung einen zweiten Schwellwert unterschreitet, wobei der zweite Schwellwert geringer als der erste Schwellwert ist. Daher umfasst das Abschalten der Leistungselektronik das Schalten der "enable line" der Leistungselektronik auf "low" mittels der zweiten Steuerelektronik. Vorteilhaft wird eine effektive Möglichkeit zum Abschalten der Leistungselektronik bereitgestellt.

In einer anderen Ausgestaltung der Erfindung ist die erste Steuerelektronik der Leistungselektronik zugeordnet, oder die erste Steuerelektronik und die Leistungselektronik sind gemeinsam innerhalb eines Gehäuses angeordnet.

Die erste Steuerelektronik ist der Leistungselektronik derart zugeordnet, dass die erste Steuerelektronik die Treiber der Endstufen der Leistungselektronik während des Betriebs der Leistungselektronik ansteuert. Hierzu bietet es sich an, die Steuerelektronik und die Leistungselektronik innerhalb eines Gehäuses gemeinsam anzuordnen. Es wird eine vorteilhafte Topologie für das Zusammenwirken von erster Steuerelektronik und der Leistungselektronik bereitgestellt.

In einer anderen Ausgestaltung der Erfindung ist die Leistungselektronik als ein Wechselrichter oder als ein Gleichspannungswandler ausgestaltet.

In elektrischen Antriebssträngen sind leistungselektronische Baugruppen, beispielsweise Wechselrichter oder Gleichspannungswandler vorhanden. Sie dienen einerseits der Wandlung der elektrischen Energie einer Energiequelle in eine mehrphasige Spannung zur Versorgung eines elektrischen Antriebsaggregates, beispielsweise einer elektrischen Maschine, oder andererseits zur Wandlung beispielsweise einer Hochspannung der Energiequelle in eine Niederspannung zur Versorgung von Steuergeräten oder anderen Verbrauchern des elektrischen Antriebsstrangs. Vorteilhaft wird ein Verfahren zur externen Überwachung eines Wechselrichters oder eines Gleichspannungswandlers bereitgestellt. Erfindungsgemäß ist die zweite Steuerelektronik einem Steuergerät zugeordnet oder die zweite Steuerelektronik innerhalb eines Gehäuses des Steuergerätes angeordnet. Das Steuergerät ist jeweils eigensicher und unabhängig von der Leistungselektronik.

Die zweite Steuerelektronik zur Ausführung des Verfahrens, dient der Steuerung eines Steuergerätes, beispielsweise eins Fahrzeugsteuergerätes (VCU) oder eines Motorsteuergerätes (ECU) oder eines anderen Steuergerätes. Hierzu ist die Steuerelektronik innerhalb eines Gehäuses des Steuergerätes anordenbar. Das Steuergerät, dem die zweite Steuerelektronik zugeordnet ist, ist unabhängig von der Leistungselektronik. Daher ist das Steuergerät unabhängig selbständig funktionsfähig. Der Betrieb des Steuergeräts ist nicht zwingend auf den Betrieb der Leistungselektronik angewiesen. Hiermit ist jedoch nicht ausgeschlossen, dass beispielsweise eine Kommunikation zwischen dem Steuergerät und der Leistungselektronik, beispielsweise über ein Verbindungskabel oder eine "enable line", möglich ist. Weiter ist das Steuergerät eigensicher. Daher umfasst dieses Steuergerät Verfahren und Mittel, einen zweiten microprozessor um das Steuergerät selbstständig zu überwachen. Vorteilhaft wird eine effiziente Topologie für die zweite Steuerelektronik zur Durchführung des Verfahrens zur Überwachung einer Leistungselektronik bereitgestellt.

Ferner betrifft die Erfindung ein Computerprogramm, das eingerichtet ist, die bisher beschriebenen Verfahren auszuführen.

Ferner betrifft die Erfindung ein maschinenlesbares Speichermedium, auf dem das beschriebene Computerprogramm gespeichert ist.

Ferner betrifft die Erfindung eine Vorrichtung zur externen Überwachung einer Leistungselektronik gemäß Anspruch 10.

Es wird eine Vorrichtung zur externen Überwachung einer Leistungselektronik bereitgestellt. Zur Ansteuerung der zu überwachenden Leistungselektronik ist eine erste Steuerelektronik vorgesehen. Die Vorrichtung zur externen Überwachung einer Leistungselektronik umfasst eine unabhängige zweite Steuerelektronik. Die zweite Steuerelektronik dient der Ermittlung eines Parameters. Weiter bestimmt die zweite Steuerelektronik eine Differenz des ermittelten Parameters und eines Sollwertes. Seitens der zweiten Steuerelektronik wird die Leistungselektronik angesteuert, falls der Betrag der Differenz einen Grenzwert überschreitet. Somit reagiert die zweite Steuerelektronik auf ein Fehlverhalten oder ein nicht bestimmungsgemäßes Verhalten der Leistungselektronik. Vorteilhaft wird eine Vorrichtung zur externen Überwachung einer Leistungselektronik bereitgestellt.

Ferner betrifft die Erfindung einen Antriebsstrang mit einer beschriebenen Vorrichtung, einer Leistungselektronik, einer ersten Steuerelektronik und einer elektrischen Maschine oder einer Energiequelle.

Ein derartiger Antriebsstrang dient beispielsweise dem Antrieb eines elektrischen Fahrzeugs. Er umfasst insbesondere eine Energiequelle oder Batterie, einen Gleichspannungswandler, einen Wechselrichter und/oder eine daran anschließbare elektrische Maschine. Mittels des Verfahrens und der Vorrichtung wird ein sicherer Betrieb des Antriebsstrangs ermöglicht.

Ferner betrifft die Erfindung ein Fahrzeug mit einem beschriebenen Antriebsstrang. Vorteilhaft wird somit ein Fahrzeug bereitgestellt, welches eine Vorrichtung zur externen Überwachung einer Leistungselektronik umfasst.

Es versteht sich, dass die Merkmale, Eigenschaften und Vorteile des erfindungsgemäßen Verfahrens entsprechend auf die Vorrichtung bzw. den Antriebsstrang und das Fahrzeug und umgekehrt zutreffen bzw. anwendbar sind.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnung

Im Folgenden soll die Erfindung anhand einiger Figuren näher erläutert werden. Dazu zeigen:
Figur 1
   Ein schematisch dargestelltes Fahrzeug mit einem Antriebsstrang und einer Vorrichtung,
Figur 2
   ein schematisch dargestelltes Verfahren zur externen Überwachung einer Leistungselektronik.

### Ausführungsformen der Erfindung

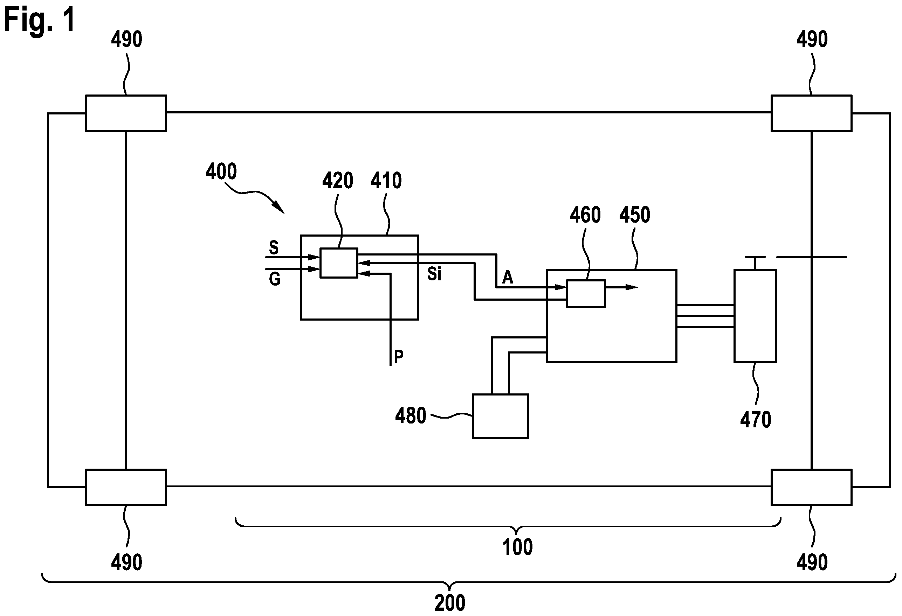

Die Figur 1 zeigt ein schematisch dargestelltes Fahrzeug 200, mit vier Rädern 490. Diese Art und Topologie des Fahrzeugs ist nur beispielhaft. Es sind ebenso zwei oder mehrrädrige Fahrzeuge zu Land oder andere Fahrzeuge zu Wasser oder in der Luft denkbar. Das Fahrzeug 200 umfasst einen Antriebsstrang 100, welcher die Vorrichtung 400, eine Leistungselektronik 450 mit einer ersten Steuerelektronik 460 und eine elektrische Maschine 470 oder eine Energiequelle, beispielsweise eine Hochvoltbatterie 480, umfasst. Die Leistungselektronik 450 wird mittels einer ersten Steuerelektronik 460 gesteuert und wandelt beispielsweise die Energie der Energiequelle 480 in eine mehrphasige Wechselspannung zur Versorgung der elektrischen Maschine 470. Die elektrische Maschine 470 ist beispielsweise für den Antrieb des Fahrzeugs 200 vorgesehen ist. Die Vorrichtung 400 zur externen Überwachung der Leistungselektronik 450 umfasst eine unabhängige zweite Steuerelektronik 420. Die zweite Steuerelektronik 420 ist beispielhaft innerhalb des Steuergerätes 410 angeordnet. Die zweite Steuerelektronik 420 ist dazu eingerichtet einen Parameter P zu ermitteln und eine Differenz D des ermittelten Parameters P und eines Sollwertes S zu bestimmen. Falls der Betrag der Differenz D einen Grenzwert G überschreitet, steuert die zweite Steuerelektronik 420 die Leistungselektronik 450 an, indem sie eine Steueranforderung A an die Leistungselektronik 450 oder deren zugeordnete erste Steuerelektronik 460 vorgibt. Die Übertragung der Steueranforderung A oder auch die gesamte Kommunikation zwischen den Komponenten kann beispielsweise drahtlos, drahtgebunden oder über ein Bussystem erfolgen. Falls die Steueranforderung A fehlerhaft oder gar nicht umgesetzt wird, schaltet die zweite Steuerelektronik 420 die Leistungselektronik 450 ab. Das Erkennen der fehlerhaften Umsetzung oder mangelnden Umsetzung der Steueranforderung A kann beispielsweise durch erneutes Bestimmen des Parameters P und der Bestimmung der Differenz des Parameters P und des Sollwertes S, der in diesem Fall der Steueranforderung A entspricht, erfolgen. Der vorgebbare Grenzwert G ist in Abhängigkeit der verwendeten und ermittelten Parameter P und Sollwerte S applizierbar. Zum Testen der Vorrichtung 400 und des Verfahrens 300 zur externen Überwachung einer Leistungselektronik 450 wird beispielsweise im Nachlauf, nach Abstellen des Fahrzeugs, seitens des Steuergeräts 410 oder der zweiten Steuerelektronik 420 die "enable line" der Leistungselektronik 450 und/oder der ersten Steuerelektronik 460 auf "low" gesetzt. Damit werden die Endstufen der Leistungselektronik 450 deaktiviert. Die zweite Steuerelektronik 460 erkennt diesen Zustand über die Endstufendiagnose der Leistungselektronik 450 und meldet diesen Zustand mittels des Signals Si an die zweite Steuerelektronik 420 zurück. Somit wird ein erfolgreiches Abschalten und Funktionieren der Leistungselektronik 450 seitens der zweiten Steuerelektronik 420 erkannt. Wenn das Signal Si ausbleibt, erkennt die zweite Steuerelektronik 420 eine fehlerhafte Leistungselektronik 450 und lässt diese dauerhaft ausgeschaltet. Hierzu wird seitens des Steuergeräts 410 oder der zweiten Steuerelektronik 420 die "enable line" der Leistungselektronik 450 und/oder der ersten Steuerelektronik 460 dauerhaft auf "low" gesetzt.

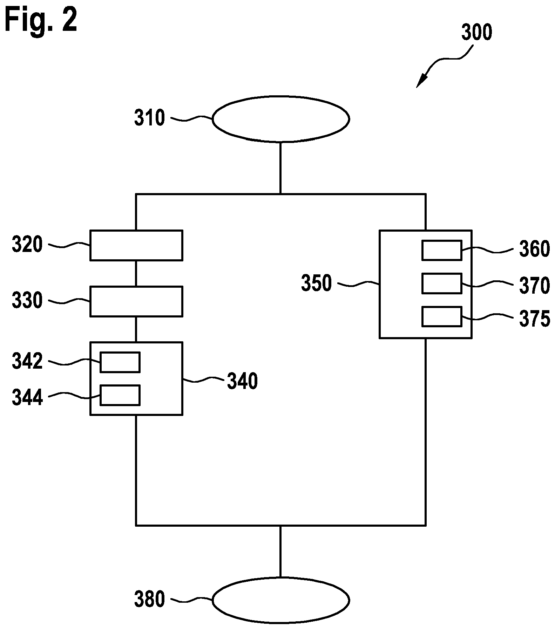

Die Figur 2 zeigt ein schematisch dargestelltes Verfahren 300 zur externen Überwachung einer Leistungselektronik 450. Das Verfahren beginnt mit Schritt 310 und verzweigt sich anschließend in den Überwachungszyklus mit den Schritten 320, 330, 340 oder in den Testzyklus mit dem Schritt 350. Mit Schritt 380 endet das Verfahren. Der Überwachungszyklus beginnt mit der Ermittlung eines Parameters P in Schritt 320. In Schritt 330 wird die Differenz des ermittelten Parameters P und eines Sollwertes S bestimmt. In Schritt 340 wird die Leistungselektronik 450 angesteuert, falls der Betrag der Differenz D größer als ein Grenzwert G ist. Der Schritt 340 umfasst mit Schritt 342 das Vorgeben einer Steueranforderung A an die erste Steuerelektronik 460, falls der Betrag der Differenz D größer als der Grenzwert G ist. Weiter umfasst der Schritt der Ansteuerung 340 mit Schritt 344 das Abschalten der Leistungselektronik 450, falls die vorgegebene Steueranforderung A aus Schritt 342 fehlerhaft umgesetzt wird. Der Testzyklus 350 umfasst die Schritte Abschalten 360 der Leistungselektronik 450. In Schritt 370 wird ein Signals Si von der ersten Steuerelektronik 460 als Reaktion auf das Abschalten empfangen. Wenn das Signal Si ausbleibt wird in Schritt 375 die Leistungselektronik 450 dauerhaft ausgeschaltet.

## Patentansprüche

1. Verfahren (300) zur externen Überwachung einer Leistungselektronik (450), wobei die Leistungselektronik (450) mittels einer ersten Steuerelektronik (460) angesteuert wird und das Verfahren (300) von einer unabhängigen zweiten Steuerelektronik (420) ausgeführt wird, mit den Schritten:
Ermittlung (320) eines Parameters (P), der mit dem Verhalten der Leistungselektronik (450) korreliert; Bestimmung (330) der Differenz (D) des ermittelten Parameters (P) und eines Sollwertes (S); Ansteuerung (340) der Leistungselektronik (450) mittels der zweiten Steuerelektronik (420), falls der Betrag der Differenz (D) einen Grenzwert (G) überschreitet, wobei
der Schritt der Ansteuerung (340) der Leistungselektronik (450) mittels der zweiten Steuerelektronik (420), das Vorgeben (342) einer Steueranforderung (A) an die erste Steuerelektronik (460) umfasst,
wobei die Steueranforderung (A) eine Vorgabe eines Drehmomentes an die Leistungselektronik oder eine Anforderung zur Überführung der Leistungselektronik in einen sicheren Zustand umfasst,
wobei die zweite Steuerelektronik (420) innerhalb eines Gehäuses eines Steuergerätes (410) angeordnet ist, **dadurch gekennzeichnet, dass**
das Steuergerät (410) eigensicher und unabhängig von der Leistungselektronik (450) ist,
wobei das Steuergerät (410 ) daher einen zweiten Mikroprozessor umfasst zur selbstständigen Überwachung des Steuergerätes (410).

2. Verfahren nach Anspruch 1, wobei die Steueranforderung (A) mittels einer Bus-Botschaft an die erste Steuerelektronik (460) vorgegeben wird.

3. Verfahren nach Anspruch 1, wobei der Schritt der Ansteuerung (340) der Leistungselektronik (450) das Abschalten (344) der Leistungselektronik (450) umfasst, falls die vorgegebene Steueranforderung (A) fehlerhaft umgesetzt wird.

4. Verfahren nach einem der vorhergehenden Ansprüche, wobei ein Testen (350) des Verfahrens folgende Schritte umfasst: Abschalten (360) der Leistungselektronik (450) und Empfang (370) eines Signals (Si) von der ersten Steuerelektronik (460) als Reaktion auf das Abschalten (360).

5. Verfahren nach Anspruch 3 oder 4, wobei das Abschalten (344), (360) der Leistungselektronik (450) das Schalten der "enable line" der Leistungselektronik auf "low" umfasst.

6. Verfahren nach einem der vorhergehenden Ansprüche, wobei die Leistungselektronik (450) ein Wechselrichter oder ein Gleichspannungswandler ist.

7. Computerprogramm, umfassend Befehle, die bei der Ausführung des Programms durch eine Vorrichtung nach einem der Ansprüche 9-11 diesen veranlassen, das Verfahren (300) nach einem der Ansprüche 1-6 auszuführen.

8. Maschinenlesbares Speichermedium, auf dem das Computerprogramm nach Anspruch 7 gespeichert ist.

9. Vorrichtung (400) zur externen Überwachung einer Leistungselektronik (450), wobei die Leistungselektronik (450) mittels einer ersten Steuerelektronik (460) angesteuert wird, wobei die Vorrichtung (400) eine unabhängige zweite Steuerelektronik (420) umfasst, die dazu eingerichtet ist, einen Parameter (P), der mit dem Verhalten der Leistungselektronik (450) korreliert, zu ermitteln, eine Differenz (D) zwischen dem ermittelten Parameter (P) und eines Sollwertes (S) zu bestimmen und die Leistungselektronik (450) anzusteuern, falls der Betrag der Differenz (D) einen Grenzwert (G) überschreitet, wobei die unabhängige zweite Steuerelektronik (420) weiter dazu eingerichtet ist, bei der Ansteuerung der Leistungselektronik (450) eine Steueranforderung (A) an die erste Steuerelektronik (460) vorzugeben,
wobei die Steueranforderung (A) eine Vorgabe eines Drehmomentes an die Leistungselektronik oder eine Anforderung zur Überführung der Leistungselektronik in einen sicheren Zustand umfasst,
wobei die zweite Steuerelektronik (420) einem Steuergerät (410) zugeordnet ist oder die zweite Steuerelektronik (420) innerhalb eines Gehäuses eines Steuergerätes (410) angeordnet ist,
**dadurch gekennzeichnet, dass** das Steuergerät (410) eigensicher und unabhängig von der Leistungselektronik (450) ist
wobei das Steuergerät (410 ) daher einen zweiten Mikroprozessor umfasst zur selbstständigen Überwachung des Steuergerätes (410).

10. Antriebsstrang (100) mit einer Vorrichtung (400) gemäß Anspruch 9, einer Leistungselektronik (450), einer ersten Steuerelektronik (460), und einer elektrischen Maschine (470) oder einer Energiequelle (480).

11. Fahrzeug (200) mit einem Antriebsstrang (100) nach Anspruch 10.

## Claims

1. Method (300) for external monitoring of power electronics (450), wherein the power electronics (450) are actuated by means of first control electronics (460) and the method (300) is carried out by independent, second control electronics (420), having the steps of:
determining (320) a parameter (P) that correlates to the behaviour of the power electronics (450); determining (330) the difference (D) between the determined parameter (P) and a target value (S); actuating (340) the power electronics (450) by means of the second control electronics (420) if the amount of the difference (D) exceeds a threshold (G),
wherein
the step of actuation (340) of the power electronics (450) by means of the second control electronics (240) comprises the specification (342) of a control requirement (A) to the first control electronics (460),
wherein the control requirement (A) comprises a specification of a torque to the power electronics or a requirement to place the power electronics in a safe state,
wherein the second control electronics (420) are arranged inside a housing of a control device (410),
**characterized in that**
the control device (410) is inherently safe and independent of the power electronics (450),
wherein the control device (410) therefore comprises a second microprocessor for independently monitoring the control device (410).

2. Method according to Claim 1, wherein the control requirement (A) is specified to the first control electronics (460) by means of a bus message.

3. Method according to Claim 1, wherein the step of actuation (340) of the power electronics (450) comprises the switching off (344) of the power electronics (450) if the specified control requirement (A) is incorrectly implemented.

4. Method according to one of the preceding claims, wherein testing (350) the method comprises the following steps:
switching off (360) the power electronics (450) and
receiving (370) a signal (Si) from the first control electronics (460) as a reaction to the switch-off (360).

5. Method according to Claim 3 or 4, wherein the switching off (344), (360) of the power electronics (450) comprises switching the "enable line" of the power electronics to "low".

6. Method according to one of the preceding claims, wherein the power electronics (450) are an inverter or a DC voltage converter.

7. Computer program comprising instructions which, when the program is executed by a device according to one of Claims 9-11, cause this to carry out the method (300) according to one of Claims 1-6.

8. Machine-readable storage medium on which the computer program according to Claim 7 is stored.

9. Device (400) for external monitoring of power electronics (450), wherein the power electronics (450) are actuated by means of first control electronics (460), wherein the device (400) comprises independent, second control electronics (420) that are designed to determine a parameter (P) that correlates to the behaviour of the power electronics (450), to determine a difference (D) between the determined parameter (P) and a target value (S), and to actuate the power electronics (450) if the magnitude of the difference (D) exceeds a threshold (G), wherein
the independent, second control electronics (420) are further designed to specify a control requirement (A) to the first control electronics (460) during actuation of the power electronics (450),
wherein the control requirement (A) comprises a specification of a torque to the power electronics or a requirement to place the power electronics in a safe state,
wherein the second control electronics (420) are assigned to a control device (410) or the second control electronics (420) are arranged inside a housing of a control device (410),
**characterized in that**
the control device (410) is inherently safe and independent of the power electronics (450),
wherein the control device (410) therefore comprises a second microprocessor for independently monitoring the control device (410).

10. Drivetrain (100) with a device (400) according to Claim 9, power electronics (450), first control electronics (460) and an electric machine (470) or an energy source (480).

11. Vehicle (200) with a drivetrain (100) according to Claim 10.

## Revendications

1. Procédé (300) de surveillance externe d'une électronique de puissance (450), l'électronique de puissance (450) étant commandée au moyen d'une première électronique de commande (460) et le procédé (300) étant mis en œuvre par une seconde électronique de commande (420) indépendante, au moyen des étapes suivantes :
la détermination (320) d'un paramètre (P) qui est corrélé au comportement de l'électronique de puissance (450) ; la détermination (330) de la différence (D) entre le paramètre (P) déterminé et une valeur de consigne (S) ; la commande (340) de l'électronique de puissance (450) au moyen de la seconde électronique de commande (420) dans le cas où la valeur de la différence (D) dépasse une valeur limite (G),
dans lequel l'étape de commande (340) de l'électronique de puissance (450) au moyen de la seconde électronique de commande (420) comprend la spécification (342) d'une demande de commande (A) à la première électronique de commande (460),
dans lequel la demande de commande (A) comprend une spécification d'un couple à l'électronique de puissance ou une demande de passage de l'électronique de puissance dans un état sécurisé,
dans lequel la seconde électronique de commande (420) est disposée à l'intérieur d'un boîtier d'un appareil de commande (410),
**caractérisé en ce que** l'appareil de commande (410) est à sécurité intrinsèque et est indépendant de l'électronique de puissance (450),
dans lequel l'appareil de commande (410) comprend à cet effet un second microprocesseur pour la surveillance autonome de l'appareil de commande (410).

2. Procédé selon la revendication 1, dans lequel la demande de commande (A) est spécifiée à la première électronique de commande (460) au moyen d'un message de bus.

3. Procédé selon la revendication 1, dans lequel l'étape de commande (340) de l'électronique de puissance (450) comprend l'arrêt (344) de l'électronique de puissance (450) dans le cas où la demande de commande (A) spécifiée est mise en œuvre de manière erronée.

4. Procédé selon l'une des revendications précédentes, dans lequel un test (350) du procédé comprend les étapes suivantes :
la désactivation (360) de l'électronique de puissance (450) et la réception (370) d'un signal (Si) en provenance de la première électronique de commande (460) en réponse à la désactivation (360).

5. Procédé selon la revendication 3 ou 4, dans lequel l'arrêt (344), (360) de l'électronique de puissance (450) comprend le basculement de la ligne "enable line" de l'électronique de puissance sur "low".

6. Procédé selon l'une des revendications précédentes, dans lequel l'électronique de puissance (450) est un onduleur ou un convertisseur continu-continu.

7. Programme d'ordinateur comprenant des instructions qui, lors de l'exécution du programme par un dispositif selon l'une des revendications 9-11, amènent ce dernier à mettre en œuvre le procédé (300) selon l'une des revendications 1-6.

8. Support de données lisible par ordinateur, sur lequel est stocké un programme d'ordinateur selon la revendication 7.

9. Dispositif (400) de surveillance externe d'une électronique de puissance (450), l'électronique de puissance (450) étant commandée au moyen d'une première électronique de commande (460), le dispositif (400) comprenant une seconde électronique de commande (420) indépendante qui est conçue pour déterminer un paramètre (P) qui est corrélé au comportement de l'électronique de puissance (450), pour déterminer une différence (D) entre le paramètre (P) déterminé et une valeur de consigne (S) et pour commander l'électronique de puissance (450) dans le cas où la valeur de la différence (D) dépasse une valeur limite (G),
dans lequel la seconde électronique de commande (420) indépendante est en outre conçue pour spécifier une demande de commande (A) à la première électronique de commande (460) lors de la commande de l'électronique de puissance (450),
dans lequel la demande de commande (A) comprend une spécification d'un couple à l'électronique de puissance ou une demande de passage de l'électronique de puissance dans un état sécurisé,
dans lequel la seconde électronique de commande (420) est associée à un appareil de commande (410) ou la seconde électronique de commande (420) est disposée à l'intérieur d'un boîtier d'un appareil de commande (410), **caractérisé en ce que** l'appareil de commande (410) est à sécurité intrinsèque et est indépendant de l'électronique de puissance (450),
dans lequel l'appareil de commande (410) comprend à cet effet un second microprocesseur pour la surveillance autonome de l'appareil de commande (410).

10. Chaîne cinématique (100) comprenant un dispositif (400) selon la revendication 9, une électronique de puissance (450), une première électronique de commande (460), et une machine électrique (470) ou une source d'énergie (480).

11. Véhicule (200) comportant une chaîne cinématique (100) selon la revendication 10.
